# EUROPEAN PATENT SPECIFICATION

(11) **EP 2 938 234 B1**
(45) Date of publication and mention of the grant of the patent: **16.11.2016**
(21) Application number: 12813894.8
(22) Date of filing: 30.12.2012
(51) Int. Cl.: A47J 31/44, A47J 31/46, A47J 31/06

(54) **BEVERAGE PREPARATION MACHINE WITH A VALVE MECHANISM**
GETRÄNKEHERSTELLUNGSMASCHINE MIT VENTILMECHANISMUS
MACHINE À PRÉPARER DES BOISSONS AVEC MÉCANISME DE VANNE

(43) Date of publication of application: 04.11.2015
(73) Proprietor: Arçelik Anonim Sirketi, 34950 Istanbul (TR)
(72) Inventor: COBAN, Omer Burak, 34950 Istanbul (TR); GERZELI, Ismail, 34950 Istanbul (TR); HASANREISOGLU, Ali Levent, 34950 Istanbul (TR)
(86) International application number: PCT/EP2012/077105
(87) International publication number: WO 2014/101967

(56) References cited:
- US-A1- 2006 086 256
- US-A1- 2006 196 562

## Description

The present invention pertains to a beverage preparation machine comprising a valve mechanism, which enables transfer of beverage content from one receptacle to another receptacle, said valve mechanism establishing a fluid communication such that a second communication path is not established before establishment of a first communication path.

A common problem in tea and/or coffee machines where a beverage content such as hot water, infusion beverage content or filtered coffee is transferred from one receptacle to another receptacle for a specific purpose, i.e. brewing or storing of the beverage content, or merely displacing the same for other reasons, for instance in order for preventing further infusion of tea plant in heated water, is that a fluid communication should be established between the two receptacle in a reliable manner. The reliability of the fluid communication implies prevention of leaking of the possibly hot beverage content, which could pose burning hazards to users. This could happen for instance upon removing said first receptacle form on top of said second receptacle, the two receptacles being fluidly connected by means of a valve mechanism.

It should be noted that the fluid communication in between two receptacles through a valve mechanism can be abruptly terminated by users during transfer of the beverage content. A reliable valve mechanism should therefore ensure that removing one receptacle from on top of a second receptacle during transfer of hot liquids should be safe to avoid spilling of hot liquids. This is also important to note that, on the part of users, it is a common occurrence that even a few drops of leakage will lead to hygiene concerns.

In the prior art, the U.S publication US2006086256 A1, among many others, represents an outlet valve pertinent to the subject-matter of the preamble of Claim 1 of the present invention. It discloses a valve device that ensures that no water can escape from the container through the outlet opening when the water container is lifted off from the base plate.

The disclosure of US2006086256 A1 represents a valve mechanism establishing a fluid communication which is not intermittent such that a full communication path is not established before said communication path, i.e. the valve interior is hermetically sealed from the surrounding environment and before a set of fluid communication paths through partial lengths of said full communication path, opening of a second fluid communication path being dependent upon opening of a first fluid communication path, is established.

The teaching of US2006086256 A1 is therefore disadvantageous in that the undesired occurrences, such as burning hazards or presence of hygiene concerns explained above are not addressed to the extent that such occurrences remain quite possible.

Primary object of the present invention is to provide beverage preparation machine comprising a valve mechanism, said valve mechanism providing safe transfer of liquids.

The present invention proposes a valve device having two separate portions. These two portions are designed such that they cooperate reciprocally to form a closed body fluid passage. The fluid passage is formed when a top containment means having a first valve body portion is placed over another containment means having another valve body portion.

When these two containment means are placed one on top of the other, the two valve portions are brought together in an interengaging relationship. This implies that a different part of the first body portion cooperates with different parts of the second body.

Namely, the first valve body is designed in the form of tubular walls with an annular edge portion bearing against a similar annular portion of the second valve body. The annular portion of the second body is axially movable around a central guiding pin while in contrast the annular portion of the first body is integral with the top containment means, i.e. they move altogether. In the meanwhile, the annular portion of the first body is guided around an axially extending central pin which is normally blocking fluid passage through said first valve body. To open the passage, it is necessary that said central guiding pin of the second body bear against the same, i.e. the first body pin. This moves the first body pin upwards and the fluid passage around the same is opened.

The invention provides that no liquid leakage occurs while placing the top containment means or removing the same from on top of the second containment means. This is achieved due to the fact that while placing the top containment means, the fluid passage in the first valve body is not opened until the containment means is fully positioned. And also while removing the same, the fluid passage therein is automatically closed before the closed block configuration of the two valve bodies is divided.

Accompanying drawings are given solely for the purpose of exemplifying a valve mechanism whose advantages over prior art were outlined above and will be explained in brief hereinafter. The drawings are not meant to delimit the scope of protection as identified in the claims nor should they be referred to alone in an effort to interpret the scope identified in said claims without recourse to the technical disclosure in the description of the present invention.

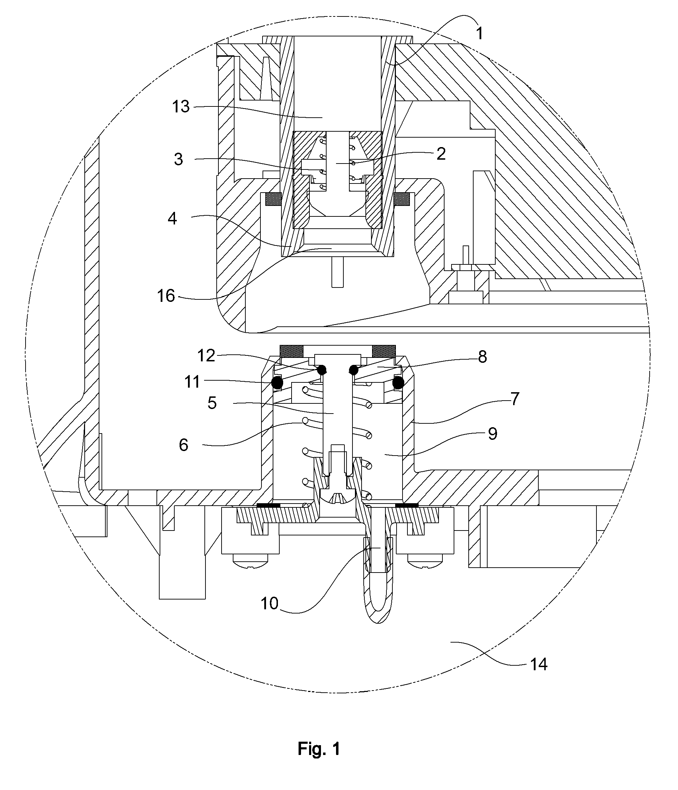

Fig. 1 demonstrates a cross-sectional view of the valve mechanism according to the present invention, where no fluid communication is established.

Fig. 2 demonstrates a cross-sectional view of the valve mechanism according to the present invention, where a first fluid communication through a partial length of the full communication path of the valve mechanism is about to be established.

Fig. 3 demonstrates a cross-sectional view of the valve mechanism according to the present invention, where a first fluid communication through a partial length of the full communication path of the valve mechanism is established.

Fig. 4 demonstrates a cross-sectional view of the valve mechanism according to the present invention, where full fluid communication is established.

Referring now to the figures outlined above, the present invention proposes a valve mechanism in which a second fluid communication through a partial length of full communication path of the valve mechanism is established upon establishing of a first fluid communication path through the remaining partial length of said full communication path.

The following numerals are assigned to different parts demonstrated in the drawings:
(1) First valve body portion
(2) First valve body pin
(3) First valve body pin spring
(4) Movement imparting means
(5) Second valve body pin
(6) Second valve body pin spring
(7) Second valve body
(8) Second valve body central portion
(9) Second valve body fluid receiving chamber
(10) Fluid intake conduit
(11) Second valve body central portion sealing means
(12) Second valve body pin sealing means
(13) First valve body chamber
(14) Second containment means
(15) First containment means
(16) First valve body outlet

The valve mechanism for use in a beverage preparation machine of the present invention features an upper or first valve body portion (1) having a first valve body chamber (13), the latter being in communication with an upper or first containment means (15). Beverage content in said first containment means (15) is transferrable therefrom to said first valve body chamber (13), from which it will further be transferred to a second valve body fluid receiving chamber (9). In a nutshell, the present invention proposes a valve mechanism comprising a first valve body portion (1) in fluid communication with a first containment means (15) and a second valve body (7) in fluid communication with a separate second containment means (14), said first containment means (15) being placeable on top of said separate second containment means (14). This configuration basically provides that each valve body (1, 7) interact with the other one such that opening of the fluid communication in the first valve body (1) is effected subsequent to the opening in the second valve body (7).

Fluid communication in between said first valve body (1) and said second valve body (7) is established in a sequential manner such that a first partial communication between a first valve body outlet (16) and said second valve body fluid receiving chamber (9) is established and only thereupon a second partial communication in between said first valve body chamber (13) and said second valve body fluid receiving chamber (9) is established; therefore opening the entire fluid communication in between the two containment means (14, 15). Said first valve body outlet (16) is normally not in fluid communication with said first valve body chamber (13), i.e. in the closed state of the valve mechanism.

Communication in between said two containment means (14, 15) is established upon placement of said first containment means (15) on top of said second containment means (14). This establishes said first partial fluid communication followed by a second partial fluid communication, therefore opening the entire fluid communication throughout the valve mechanism as explained below.

Said first valve body (1) according to the present invention comprises a tubular central portion fixedly joined to said first containment means (15). Said first valve body's (1) lateral walls extend downwardly to form a movement imparting means (4) in the shape of an annular flange portion forming the lowermost or outermost edge portion of said first valve body (1) in the direction of said second valve body (7). When said first containment means (15) is being placed on top of said second containment means (14), this movement imparting means (4) of the first valve body (1) firstly comes in contact with a second valve body central portion (8), the latter having a second valve body pin (5) in the form of a central or axial pin (5) fixedly joined to said second valve body (7) with respect to which said second valve body central portion (8) is axially movable in response to advancement of said movement imparting means (4). In other words, said second valve body central portion (8) is guided around said axial pin (5) that extends in parallel with the longitudinal axis of said second body (7). Said axial pin (5) being fixedly joined to said second valve body (7) provides that said second valve body central portion (8) can be axially movable in response to advancement of said movement imparting means (4).

Said second valve body central portion (8) being movable by said movement imparting means (4) axially in the direction of said second containment means (14) against a coaxial spring (6) disposed around said axial pin (5) provides that only a a partial communication through said valve mechanism is established.

Said movement imparting means (4) being fixedly joined to said first containment means (15) is therefore cooperable with said second valve body central portion (8). Said movement imparting means (4) and said second valve body central portion (8) are joinable to form a leak-resistant block with the valve interior being sealed from surrounding environment. This provides that a leak-proof environment is obtained before fluid communication is actually initiated. Said second valve body central portion (8) being movable in abutment with the inner surface of said second valve body (7) further provides that the sealed fluid passage provided by the established annular contact of said movement imparting means (4) with said second valve body central portion (8) is dynamically maintained, i.e. while said movement imparting means (4) advances said second valve body central portion (8).

Said second valve body central portion (8) being axially moved by said movement imparting means (4) in the direction of said second containment means (14) against a coaxial spring (second valve body pin spring, 6) provides that said first partial fluid communication between said first valve body outlet (16) and said second valve body fluid receiving chamber (9) is established due to the fact that said second valve body central portion (8), while moving, leaves an emptied annular space around said stationary second valve body pin (5).

Said second valve body central portion (8) being axially movable along said second valve body (7) by said movement imparting means (4) to form a fluid communication between outlet of said first body portion (1) and said second body (7) after said movement imparting means (4) and said second valve body central portion (8) join to form a block, forms an effective solution establishing only a partial fluid communication along the entire fluid path of the joined valve bodies (1, 7).

Due to the fact that the beverage content to be transferred to said second containment means (14) is preserved in said first containment means (15), there is no fluid transfer therefrom at this stage of the transfer operation, i.e. while said first containment means (15) is not yet fully positioned on top of said second containment means (14).

Said first partial communication between said first valve body outlet (16) and said second valve body fluid receiving chamber (9) also enables fluid communication into said second valve body fluid receiving chamber (9) and therefrom into said second containment means (14) since communication in between these latter two is a normally open one.

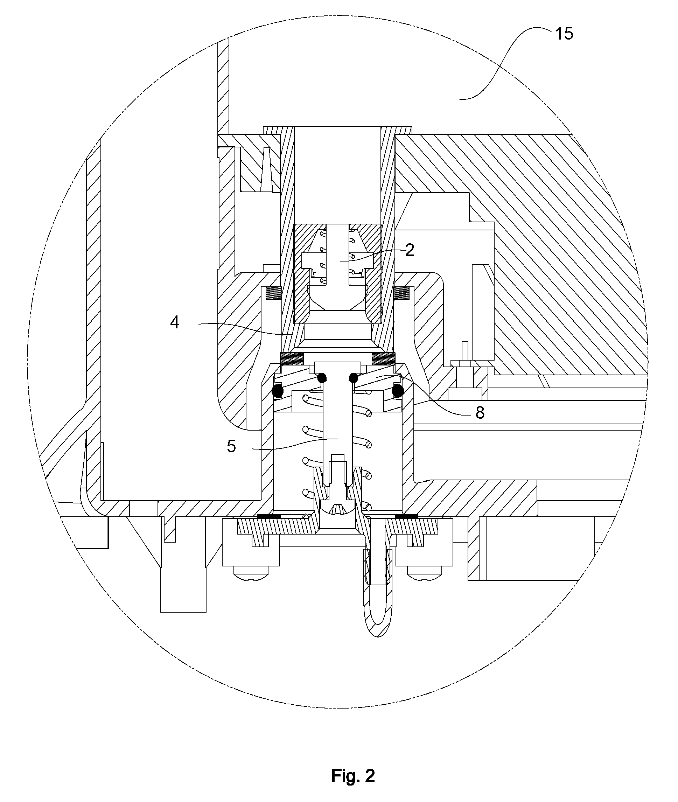

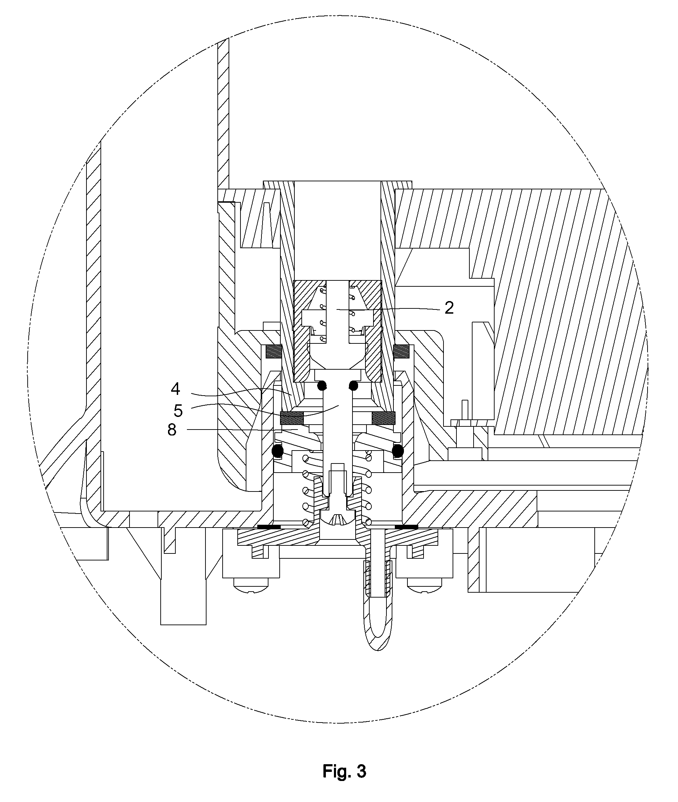

At the moment when said movement imparting means (4) in the form of an annular flange portion contacts said second valve body central portion (8), said first and second valve bodies (1,7) are joined to form a block where the valve interior is hermetically sealed from the surrounding environment. The first moment said first and second valve bodies (1, 7) are joined may be seen in Fig. 2. Further advancement of said movement imparting means (14) where said first partial fluid communication is established may be seen in Fig. 3.

Said second partial fluid communication is established starting from the moment when said second valve body stationary pin (5) comes in contact with a first valve body pin (2). The first moment the two pins (2, 5) touch each other may be seen in Fig. 3.

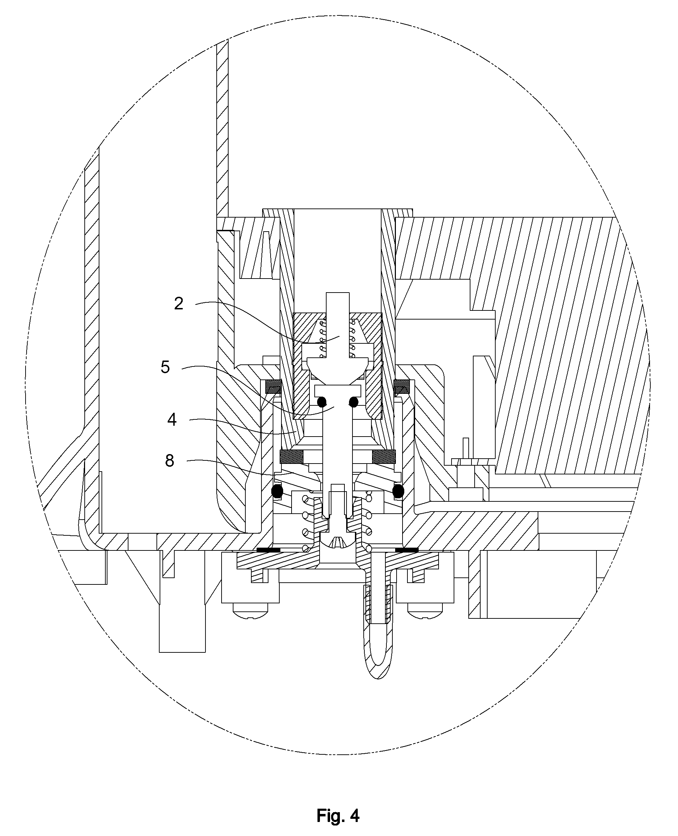

When said second valve body pin (5) contacts said first valve body pin (2), the latter being axially movable throughout said first valve body (1), it moves the same in the direction of said first containment means (5) against a first valve body pin spring (3). To that end, said second partial fluid communication in between said first valve body chamber (13) and said first valve body outlet (16) is established through around said first valve body pin (2). The configuration of the two valve body (1, 7) components when the entire fluid communication thereinbetween is enabled may be seen in Fig. 4. At this stage, the first containment means (15) is fully placed on said second containment means (14) and the two valve bodies (1, 7) are interengaged to effect transfer of the beverage content from said first containment means (15) into said second containment means (14).

Said axial pin (5) being cooperable with said first valve body pin (2) that is axially movable throughout said first valve body (1) is advantageous in that it provides fluid communication through the remaining valve portion only at the final stage of the valve opening.

It is important to note that the entire fluid transfer is only initiated when said first containment means (15) is fully placed on said second containment means (14). It is further important to note that fluid transfer throughout the first valve body (1) is only enabled at the final stage, i.e. after the two valve bodies (1, 7) are joined such that the valve interior is sealed and after fluid transfer throughout the second valve body (7) is enabled. This ensures that the beverage content in the first containment means (15) is directly transferrable to said second containment means (14) and prevention of hot liquid flow outside the valve mechanism is ensured.

Similarly, it is also important to note that the valve mechanism is safely closed and remained so in the event that the order of actions is reversed, i.e. when said first containment means (15) is abruptly removed from on top of said second containment means (14) during transfer of hot liquids. In this case, the fluid transfer throughout the first valve body (1) is instantly terminated as said second valve body stationary pin (5) ceases contact with said first valve body pin (2) to let said first pin spring (3) restore said pin (2) to its original position where it blocks said second fluid communication throughout said first valve body (1). This is also advantageous in that any fluids which might be present in said first valve body outlet (16) during removal of the first containment means (15) can pass therefrom into said second valve body fluid receiving chamber (9) and into said second containment means (14) since said first fluid communication path is still open at this stage of the separation of the two containment means (14, 15). Therefore undesired occurrences such as burning hazards are fully eliminated.

The valve device of the invention further comprises a plurality of sealing means, typically o-rings, namely a second valve body central portion sealing means (11) and a second valve body pin sealing means (12). These further support the leak-proof nature of the valve mechanism of the invention.

Said first and second containment means (14, 15) each are either a liquid containing receptacle or a liquid transfer conduit. To that end, the valve of the invention may be embedded in between receptacles or conduits as long as separation of two entities or placement of one over the other is effected to establish a temporary fluid communication thereinbetween.

## Claims

1. A beverage preparation machine comprising a valve mechanism having a first body portion (1) in fluid communication with a first containment means (15) and a second body (7) in fluid communication with a separate second containment means (14), said first containment means (15) being stationarily placeable over said separate second containment means (14) **characterized in that**
said first body portion (1) comprises at least one movement imparting means (4) fixedly joined to said first containment means (15), said movement imparting means (4) being cooperable with a second valve body central portion (8), said movement imparting means (4) and said second valve body central portion (8) being joinable to form a leak-resistant block with the valve interior being sealed from surrounding environment, said second valve body central portion (8) being axially movable along said second valve body (7) by said movement imparting means (4) to form a fluid communication between an outlet of said first body portion (1) and said second body (7) after said movement imparting means (4) and said second valve body central portion (8) join to form a block.

2. A beverage preparation machine as set forth in Claim 1 wherein said second valve central body portion (8) is movable in abutment with inner surface of said second valve body (7).

3. A beverage preparation machine as set forth in Claim 1 or 2 wherein said movement imparting means (4) is formed as an annular flange portion extending as an outermost edge portion of said first valve body (1) in the direction of said second body (7).

4. A beverage preparation machine as set forth in Claim 1 or 2 wherein said second valve body central portion (18) is guided around a second valve body pin (5) that extends in parallel with the longitudinal axis of said second body (7).

5. A beverage preparation machine as set forth in Claim 3 and 4 wherein said second valve body pin (5) is fixedly joined to said second valve body (7) with respect to which said second valve body central portion (8) is axially movable in response to advancement of said movement imparting means (4).

6. A beverage preparation machine as set forth in Claim 5 wherein said second valve body central portion (18) is movable by said movement imparting means (4) axially in the direction of said second containment means (14) against a second valve body pin spring (6) disposed around said second valve body pin (5).

7. A beverage preparation machine as set forth in Claim 4, 5 or 6 wherein said second valve body pin (5) is cooperable with a first valve body pin (2) that is axially movable throughout said first valve body (1).

8. A beverage preparation machine as set forth in Claim 7 wherein said first valve body pin (2) is movable by said second valve body pin (5) in the direction of said first containment means (15) against a first valve body pin spring (3) disposed around the first valve body pin (2).

9. A beverage preparation machine as set forth in Claim 1, 6 or 8 wherein said first and second containment means (14, 15) each are either a liquid containing receptacle or a liquid transfer conduit.

## Patentansprüche

1. Getränkezubereitungsmaschine, umfassend einen Ventilmechanismus mit einem ersten Körperabschnitt (1) in Fluidverbindung mit einem ersten Rückhaltemittel (15) und einen zweiten Körper (7) in Fluidverbindung mit einem separaten zweiten Rückhaltemittel (14), wobei das erste Rückhaltemittel (15) stationär über dem separaten zweiten Rückhaltemittel (14) angeordnet werden kann, **dadurch gekennzeichnet, dass** der erste Körperabschnitt (1) wenigstens ein Bewegungsmittel (4) umfasst, das fest mit dem ersten Rückhaltemittel (15) verbunden ist, wobei das Bewegungsmittel (4) mit einem Mittelabschnitt des zweiten Ventilkörpers (8) zusammenwirken kann, wobei das Bewegungsmittel (4) und der Mittelabschnitt des zweiten Ventilkörpers (8) verbindbar sind, um einen austrittsfesten Block zu bilden, wobei ein Ventilinneres von der Umgebung abgedichtet ist, wobei der Mittelabschnitt des zweiten Ventilkörpers (8) durch das Bewegungsmittel (4) axial am zweiten Ventilkörper (7) entlang bewegbar ist, um eine Fluidverbindung zwischen einem Auslass des ersten Körperabschnitts (1) und dem zweiten Körper (7) herzustellen, wenn das Bewegungsmittel (4) und der Mittelabschnitt des zweiten Ventilkörpers (8) sich verbinden, um einen Block zu bilden.

2. Getränkezubereitungsmaschine nach Anspruch 1, wobei der Mittelabschnitt des zweiten Ventilkörpers (8) in Anlage an den zweiten Ventilkörper (7) bewegbar ist.

3. Getränkezubereitungsmaschine nach Anspruch 1 oder 2, wobei das Bewegungsmittel (4) als ein ringförmiger Flanschabschnitt gebildet ist, der sich als ein äußerster Kantenabschnitt des ersten Ventilkörpers (1) in die Richtung des zweiten Körpers (7) erstreckt.

4. Getränkezubereitungsmaschine nach Anspruch 1 oder 2, wobei der Mittelabschnitt des zweiten Ventilkörpers (18) um einen Stift des zweiten Ventilkörpers (5) geführt ist, der sich parallel zur Längsachse des zweiten Körpers (7) erstreckt.

5. Getränkezubereitungsmaschine nach Anspruch 3 und 4, wobei der Stift des zweiten Ventilkörpers (5) fest mit dem zweiten Ventilkörper (7) verbunden ist, in Bezug auf den der Mittelabschnitt des zweiten Ventilkörpermittels (8) in Reaktion auf eine Vorwärtsbewegung des Bewegungsmittels (4) axial bewegbar ist.

6. Getränkezubereitungsmaschine nach Anspruch 5, wobei der Mittelabschnitt des zweiten Ventilkörpers (18) durch das Bewegungsmittel (4) gegen eine Stiftfeder des zweiten Ventilkörpers (6), die um den Stift des zweiten Ventilkörpers (5) herum angeordnet ist, axial in Richtung des zweiten Rückhaltemittels (14) bewegbar ist.

7. Getränkezubereitungsmaschine nach Anspruch 4, 5 oder 6, wobei der Stift des zweiten Ventilkörpers (5) mit einem Stift des ersten Ventilkörpers (2) zusammenwirken kann, der axial durch den gesamten ersten Ventilkörper (1) bewegbar ist.

8. Getränkezubereitungsmaschine nach Anspruch 7, wobei der Stift des ersten Ventilkörpers (2) durch den Stift des zweiten Ventilkörpers (5) gegen eine Stiftfeder des ersten Ventilkörpers (3), die um den Stift des ersten Ventilkörpers (2) herum angeordnet ist, in Richtung des ersten Rückhaltemittels (15) bewegbar ist.

9. Getränkezubereitungsmaschine nach Anspruch 1, 6 oder 8, wobei das erste und zweite Rückhaltemittel (14, 15) jeweils einen Flüssigkeitsaufnahmebehälter oder eine Flüssigkeitsübertragungsleitung enthalten.

## Revendications

1. Une machine de préparation de boissons comprenant un mécanisme de soupape présentant une première partie de corps (1) en communication fluidique avec un premier moyen de confinement (15) et un deuxième corps (7) en communication fluidique avec un deuxième moyen de confinement séparé (14), ledit premier moyen de confinement (15) pouvant être placé de manière stationnaire sur ledit deuxième moyen de confinement séparé (14), **caractérisée en ce que**
ladite première partie de corps (1) comprend au moins un moyen de transfert de mouvement (4) qui est relié de manière fixée audit premier moyen de confinement (15), ledit moyen de transfert de mouvement (4) pouvant coopérer avec une partie centrale du deuxième corps de soupape (8), ledit moyen de transfert de mouvement (4) et ladite partie centrale du deuxième corps de soupape (8) pouvant être joints pour former un bloc résistant aux fuites de telle sorte que l'intérieur de la soupape est étanche à l'environnement, ladite partie centrale du deuxième corps de soupape (8) pouvant être déplacée le long dudit deuxième corps de soupape (7) par ledit moyen de transfert de mouvement (4) pour former une communication fluidique entre une sorte de ladite première partie de corps (1) et ledit deuxième corps (7) après que ledit moyen de transfert de mouvement (4) et ladite partie centrale du deuxième corps de soupape (8) se joignent pour former un bloc.

2. Une machine de préparation de boissons selon la Revendication 1 où ladite partie centrale du deuxième corps de soupape (8) peut se déplacer en s'appuyant à la surface intérieur de ledit deuxième corps de soupape (7).

3. Une machine de préparation de boissons selon la Revendication 1 ou 2 où ledit moyen de transfert de mouvement (4) est formé comme une partie de rebord annulaire s'étendant comme une partie de bord la plus extérieure dudit premier corps de soupape (1) dans la direction dudit deuxième corps (7).

4. Une machine de préparation de boissons selon la Revendication 1 ou 2 où ladite partie centrale du deuxième corps de soupape (18) est guidée autour d'une goupille du deuxième corps de soupape (5) qui s'étend parallèlement à l'axe longitudinal dudit deuxième corps (7).

5. Une machine de préparation de boissons selon la Revendication 3 et 4 où ladite goupille du deuxième corps de soupape (5) est reliée de manière fixée audit deuxième corps de soupape (7) par rapport à laquelle ladite partie centrale dudit deuxième corps de soupape (8) peut se déplacer axialement en réponse à l'avancement dudit moyen de transfert de mouvement (4).

6. Une machine de préparation de boissons selon la Revendication 5 où ladite partie centrale du deuxième corps de soupape (18) peut être déplacée par ledit moyen de transfert de mouvement (4) axialement dans la direction dudit deuxième moyen de confinement (14) contre un ressort de goupille du deuxième corps de soupape (6) disposé autour de ladite goupille du deuxième corps de soupape (5).

7. Une machine de préparation de boissons selon la Revendication 4, 5 ou 6 où ladite goupille du deuxième corps de soupape (5) peut coopérer avec une goupille du premier corps de soupape (2) qui peut se déplacer axialement dans ledit premier corps de soupape (1).

8. Une machine de préparation de boissons selon la Revendication 7 où ladite goupille du premier corps de soupape (2) peut être déplacée par ladite goupille du deuxième corps de soupape (5) dans la direction dudit premier moyen de confinement (15) contre un ressort de goupille du premier corps de soupape (3) disposé autour de ladite goupille du premier corps de soupape (2).

9. Une machine de préparation de boissons selon la Revendication 1, 6, ou 8 où chacun desdits premier et deuxième moyens de confinement (14, 15) est un réservoir de liquide ou un conduit de transfert de liquide.
